# EUROPEAN PATENT APPLICATION

(11) **EP 2 731 327 A2**
(43) Date of publication of application: **14.05.2014**
(21) Application number: 13192056.3
(22) Date of filing: 08.11.2013
(51) Int. Cl.: H04N 5/232

(54) **Mobile terminal and control method for the mobile terminal**

(30) Priority: 13.11.2012 KR 20120128357
(71) Applicant: LG Electronics Inc., Seoul (KR)
(72) Inventor: Kim, Yongjae, Seoul (KR); Choi, Younhwa, Geumcheon-gu (KR)
(74) Representative: Cabinet Plasseraud

(57) **Abstract**

The present disclosure relates to a mobile terminal capable of sensing circumstance information and a control method thereof. A mobile terminal according to an embodiment of the present disclosure may include a camera disposed on a surface of the body, a circumstance information unit configured to collect surrounding circumstance information on the basis of the body, a display unit configured to display an image received through the camera, and a controller configured to store the collected circumstance information along with the image in a memory in response to a capture command for the image being received.

## Description

### BACKGROUND OF THE INVENTION

### 1. Field of the invention

The present disclosure relates to a mobile terminal capable of sensing circumstance information and a control method thereof.

### 2. Description of the related art

Terminals can be classified into a mobile terminal and a stationary terminal based on its mobility. Furthermore, the mobile terminal can be further classified into a handheld terminal and a vehicle mount terminal based on whether or not it can be directly carried by a user.

As it becomes multifunctional, the terminal can be allowed to capture still images or moving images, play music or video files, play games, receive broadcast and the like, so as to be implemented as an integrated multimedia player. Moreover, the improvement of the terminal may be taken into consideration in the aspect of structure or software to support and enhance the function of the terminal.

Furthermore, the mobile terminal can collect surrounding circumstance information such as temperature, humidity, and the like.

### SUMMARY OF THE INVENTION

An object of the present disclosure is to provide a mobile terminal and a control method thereof capable of storing a current circumstance along with an image captured through a camera, thereby providing information on a time point at which the image had been captured to the user.

In order to accomplish the foregoing objective, a mobile terminal according to an embodiment of the present disclosure may include a camera disposed on a surface of the body, a circumstance information unit configured to collect surrounding circumstance information on the basis of the body, a display unit configured to display an image received through the camera, and a controller configured to store the collected circumstance information along with the image in a memory in response to a capture command for the image being received.

As an embodiment, the circumstance information may include a plurality of detailed information, and the plurality of detailed information may include any one of the location information of the body, and humidity information, temperature information, wind speed information, sound information, brightness information, weather information, and smell information around the body.

As an embodiment, the controller may generate an image object displayed with the image and the collected circumstance information using the image and circumstance information stored in the memory.

As an embodiment, the image may be displayed in one region of the image object, and detailed information items corresponding to a plurality of detailed information, respectively, contained in the circumstance information may be displayed in another region other than the one region.

As an embodiment, the mobile terminal may further include a wireless communication unit configured to transmit and receive information to and from an external device using wireless signals, wherein when at least one of the detailed information items is selected, the controller controls the wireless communication unit to transmit detailed information corresponding to the selected detailed information item to a preset external device.

As an embodiment, the controller may control the display unit such that a detailed information item corresponding to the detailed information transmitted to the preset external device is visually differentiated from the other detailed information items.

As an embodiment, when a preset touch input is applied to the detailed information item, the controller may display an edit window in at least one region of the display unit such that the detailed information can be edited by the user.

As an embodiment, the controller may update detailed information edited through the edit window, and control the display unit to display the edited detailed information on a detailed information item corresponding to the edited detailed information among detailed information items displayed on the image object.

As an embodiment, the image object may be displayed on the display unit based on the user's display request or the terminal body drawing close to a preset location.

As an embodiment, the controller may display the image object on a lock screen limiting the reception of a control command for an application in response to the terminal body being drawn close to a preset location.

As an embodiment, detailed information corresponding to a detailed item displayed on the image object may be transmitted to at least one preset external device based on a touch input to the image object, and the controller may determine whether to transmit detailed information corresponding to the whole of a plurality of detailed items or transmit detailed information corresponding to part of the plurality of detailed information items based on a touch input to the image object among the plurality of detailed information items displayed on the image object.

As an embodiment, when detailed information corresponding to part of the plurality of detailed information items is determined to be transmitted, at least one of the plurality of detailed information items may be selected from the user, and the controller may process the selected detailed information item in a highlighted manner.

As an embodiment, a plurality of image objects may be displayed on the lock screen, and when any one image object is moved to a preset location based on a touch input to the any one of the plurality of image objects, detailed information corresponding to a detailed information item displayed on the any one image object may be transmitted to at least one preset external device.

As an embodiment, the controller may display a plurality of image objects in one region in a circumstance information transmission mode, and display a graphic image corresponding to at least one preset external device around the plurality of image objects, and when any one of the plurality of image objects is dragged to any one of the graphic images, circumstance information corresponding to the dragged image object may be transmitted to an external device corresponding to the any one graphic image among the at least one preset external device.

As an embodiment, the controller may selectively transmit information that can be used for the external device corresponding to the any one graphic image among circumstance information corresponding to the dragged image object.

As an embodiment, the controller may display a frame image corresponding to the circumstance information around a preview region displayed with the image, and store the frame image along with the image in response to the capture command.

As an embodiment, the circumstance information may include at least one of the location information of the body, humidity information, temperature information, wind speed information, sound information, brightness information, weather information, and smell information around the body.

As an embodiment, the circumstance information may be collected based on the camera being activated.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram illustrating a mobile terminal according to an embodiment of the present disclosure;
FIGS. 2A and 2B are front perspective views illustrating an example of a mobile terminal according to an embodiment of the present disclosure;
FIG. 3 is a flow chart for explaining a method of controlling a mobile terminal according to an embodiment of the present disclosure;
FIGS. 4A and 4B are conceptual views for explaining a control method illustrated in FIG. 3;
FIGS. 5A, 5B, 6A and 6B are conceptual views for explaining a method of providing information associated with circumstance information collected in a mobile terminal according to an embodiment of the present disclosure;
FIGS. 7A, 7B, 7C and 7D are conceptual views for explaining a method of editing circumstance information collected in a mobile terminal according to an embodiment of the present disclosure;
FIGS. 8A, 8B, 8C and 8D are conceptual views for explaining a method of sharing circumstance information collected in a mobile terminal according to an embodiment of the present disclosure; and
FIGS. 9A and 9B are conceptual views for explaining a method of using circumstance information collected in a mobile terminal according to an embodiment of the present disclosure.

### DETAILED DESCRIPTION OF THE INVENTION

Hereinafter, the embodiments disclosed herein will be described in detail with reference to the accompanying drawings, and the same or similar elements are designated with the same numeral references regardless of the numerals in the drawings and their redundant description will be omitted. A suffix "module" or "unit" used for constituent elements disclosed in the following description is merely intended for easy description of the specification, and the suffix itself does not give any special meaning or function. In describing the embodiments disclosed herein, moreover, the detailed description will be omitted when a specific description for publicly known technologies to which the invention pertains is judged to obscure the gist of the present invention. Also, it should be noted that the accompanying drawings are merely illustrated to easily explain the spirit of the invention, and therefore, they should not be construed to limit the technological spirit disclosed herein by the accompanying drawings.

A mobile terminal disclosed herein may include a portable phone, a smart phone, a laptop computer, a digital broadcast terminal, a personal digital assistant (PDA), a portable multimedia player (PMP), a navigation, a slate PC, a tablet PC, an ultra book and the like. However, it would be easily understood by those skilled in the art that a configuration according to the following description may be applicable to a stationary terminal such as a digital TV, a desktop computer, and the like, excluding constituent elements particularly configured for mobile purposes.

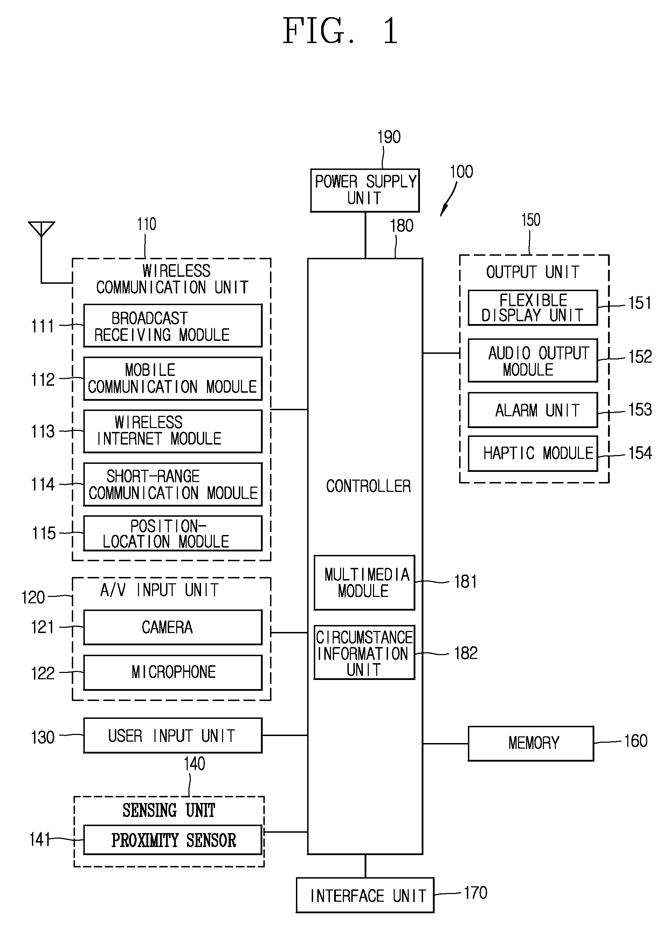

FIG. 1 is a block diagram illustrating a mobile terminal according to an embodiment disclosed herein.

The mobile terminal 100 may include a wireless communication unit 110, an audio/video (A/V) input unit 120, a user input unit 130, a sensing unit 140, an output unit 150, a memory 160, an interface unit 170, a controller 180, a power supply unit 190, and the like. However, the constituent elements as illustrated in FIG. 1 are not necessarily required, and the mobile terminal may be implemented with greater or less number of elements than those illustrated elements.

Hereinafter, the constituent elements will be described in sequence.

The wireless communication unit 110 typically includes one or more elements allowing radio communication between the mobile terminal 100 and a wireless communication system, or allowing radio communication between radio communication the mobile terminal 100 and a network in which the mobile terminal 100 is located. For example, the wireless communication unit 110 may include a broadcast receiving module 111, a mobile communication module 112, a wireless Internet module 113, a short-range communication module 114, a location information module 115, and the like.

The broadcast receiving module 111 receives broadcast signals and/or broadcast associated information from an external broadcast management server through a broadcast channel.

The broadcast channel may include a satellite channel and/or a terrestrial channel. The broadcast management server may mean a server that generates and transmits a broadcast signal and/or broadcast associated information or a server that receives a previously generated broadcast signal and/or broadcast associated information and transmits to the mobile terminal 100. The broadcast signal may include a TV broadcast signal, a radio broadcast signal and a data broadcast signal as well as a broadcast signal in a form that a data broadcast signal is coupled to the TV or radio broadcast signal.

The broadcast associated information may mean information regarding a broadcast channel, a broadcast program, a broadcast service provider, and the like. The broadcast associated information may also be provided through a mobile communication network, and in this case, the broadcast associated information may be received by the mobile communication module 112.

The broadcast associated information may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 111 may receive a broadcast signal using various types of broadcast systems. In particular, the broadcast receiving module 111 may receive a digital broadcast signal using a digital broadcast system such as digital multimedia broadcasting-terrestrial (DMB-T), digital multimedia broadcasting-satellite (DMB-S), media forward link only (MediaFLO), digital video broadcast-handheld (DVB-H), integrated services digital broadcast-terrestrial (ISDB-T), and the like. The broadcast receiving module 111 is, of course, configured to be suitable for every broadcast system that provides a broadcast signal as well as the above-mentioned digital broadcast systems.

The broadcast signal and/or broadcast-associated information received through the broadcast receiving module 111 may be stored in the memory 160.

The mobile communication module 112 transmits and/or receives a radio signal to and/or from at least one of a base station, an external terminal and a server over a mobile communication network. Here, the radio signal may include a voice call signal, a video call signal and/or various types of data according to text and/or multimedia message transmission and/or reception.

The mobile communication module 112 may be configured to implement an video communication mode and a voice communication mode. The video communication mode refers to a configuration in which communication is made while viewing an image of the counterpart, and the voice communication mode refers to a configuration in which communication is made without viewing an image of the counterpart. The mobile communication module 112 may be configured to transmit or receive at least one of voice or image data to implement the video communication mode and voice communication mode.

The wireless Internet module 113 means a module for supporting wireless Internet access. The wireless Internet module 113 may be built-in or externally installed to the mobile terminal 100. Here, it may be used a wireless Internet access technique including a WLAN (Wireless LAN), Wi-Fi, Wibro (Wireless Broadband), Wimax (World Interoperability for Microwave Access), HSDPA (High Speed Downlink Packet Access), and the like.

The short-range communication module 114 is a module for supporting a short-range communication. Here, it may be used a short-range communication technology including Bluetooth, Radio Frequency IDentification (RFID), Infrared Data Association (IrDA), Ultra WideBand (UWB), ZigBee, and the like.

The location information module 115 is a module for checking or acquiring a location of the mobile terminal, and there is a GPS module as a representative example.

Referring to FIG. 1, the A/V(audio/video) input unit 120 receives an audio or video signal, and the A/V (audio/video) input unit 120 may include a camera 121 and a microphone 122. The camera 121 processes a image frame, such as still picture or video, obtained by an image sensor in a video phone call or image capturing mode. The processed image frame may be displayed on a display unit 151.

The image frames processed by the camera 121 may be stored in the memory 160 or transmitted to an external device through the wireless communication unit 110. Two or more cameras 121 may be provided according to the use environment of the mobile terminal.

The microphone 122 receives an external audio signal through a microphone in a phone call mode, a recording mode, a voice recognition mode, and the like, and processes the audio signal into electrical voice data. The processed voice data may be converted and outputted into a format that is transmittable to a mobile communication base station through the mobile communication module 112 in the phone call mode. The microphone 122 may implement various types of noise canceling algorithms to cancel noise generated in a procedure of receiving the external audio signal.

The user input unit 130 may generate input data to control an operation of the terminal. The user input unit 130 may be configured by including a keypad, a dome switch, a touch pad (pressure/capacitance), a jog wheel, a jog switch, and the like.

The sensing unit 140 detects a current status of the mobile terminal 100 such as an opened or closed state of the mobile terminal 100, a location of the mobile terminal 100, an orientation of the mobile terminal 100, and the like, and generates a sensing signal for controlling the operation of the mobile terminal 100. For example, when the mobile terminal 100 is a slide phone type, it may sense an opened or closed state of the slide phone. Furthermore, the sensing unit 140 takes charge of a sensing function associated with whether or not power is supplied from the power supply unit 190, or whether or not an external device is coupled to the interface unit 170.

The output unit 150 is configured to provide an output for audio signal, video signal, or alarm signal, and the output unit 150 may include the display unit 151, an audio output module 152, an alarm unit 153, a haptic module 154, and the like.

The display unit 151 may display (output) information processed in the mobile terminal 100. For example, when the mobile terminal 100 is in a phone call mode, the display unit 151 may display a User Interface (UI) or a Graphic User Interface (GUI) associated with a call. When the mobile terminal 100 is in a video call mode or image capturing mode, the display unit 151 may display a captured image and/or received image, a UI or GUI.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, and an e-ink display.

Some of those displays may be configured with a transparent or optical transparent type to allow viewing of the exterior through the display unit, which may be called transparent displays. An example of the typical transparent displays may include a transparent LCD (TOLED), and the like. Under this configuration, a user can view an object positioned at a rear side of a terminal body through a region occupied by the display unit 151 of the terminal body.

Two or more display units 151 may be implemented according to a configured aspect of the mobile terminal 100. For instance, a plurality of the display units 151 may be arranged on one surface to be spaced apart from or integrated with each other, or may be arranged on different surfaces.

When the display unit 151 and a touch sensitive sensor (hereinafter, referred to as a "touch sensor") have an interlayer structure (hereinafter, referred to as a "touch screen"), the display unit 151 may be used as an input device rather than an output device. The touch sensor may be implemented as a touch film, a touch sheet, a touch pad, and the like.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also a touch pressure.

When there is a touch input to the touch sensor, the corresponding signals are transmitted to a touch controller (not shown). The touch controller processes the received signals, and then transmits corresponding data to the controller 180. Accordingly, the controller 180 may sense which region of the display unit 151 has been touched.

Referring to FIG. 1, a proximity sensor 141 may be arranged at an inner region of the mobile terminal 100 covered by the touch screen, or near the touch screen. The proximity sensor indicates a sensor to sense presence or absence of an object approaching to a surface to be sensed, or an object disposed near a surface to be sensed, by using an electromagnetic field or infrared rays without a mechanical contact. The proximity sensor has a longer lifespan and a more enhanced utility than a contact sensor.

The examples of the proximity sensor may include an optical transmission type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this case, the touch screen (touch sensor) may be categorized into a proximity sensor.

Hereinafter, for the sake of convenience of brief explanation, a status that the pointer is positioned to be proximate onto the touch screen without contact will be referred to as "proximity touch", whereas a status that the pointer substantially comes in contact with the touch screen will be referred to as "contact touch". For the position corresponding to the proximity touch of the pointer on the touch screen, such position corresponds to a position where the pointer faces perpendicular to the touch screen upon the proximity touch of the pointer.

The proximity sensor senses proximity touch, and proximity touch patterns (e.g., distance, direction, speed, time, position, moving status, etc.). Information relating to the sensed proximity touch and the sensed proximity touch patterns may be output onto the touch screen.

The audio output module 152 may output audio data received from the wireless communication unit 110 or stored in the memory 160, in a call-receiving mode, a call-placing mode, a recording mode, a voice recognition mode, a broadcast reception mode, and so on. The audio output module 152 may output audio signals relating to functions performed in the mobile terminal 100, e.g., sound alarming a call received or a message received, and so on. The audio output module 152 may include a receiver, a speaker, a buzzer, and so on.

The alarm 153 outputs signals notifying occurrence of events from the mobile terminal 100. The events occurring from the mobile terminal 100 may include call received, message received, key signal input, touch input, and so on. The alarm 153 may output not only video or audio signals, but also other types of signals such as signals notifying occurrence of events in a vibration manner. Since the video or audio signals can be output through the display unit 151 or the audio output unit 152, the display unit 151 and the audio output module 152 may be categorized into a part of the alarm 153.

The haptic module 154 generates various tactile effects which a user can feel. A representative example of the tactile effects generated by the haptic module 154 includes vibration. Vibration generated by the haptic module 154 may have a controllable intensity, a controllable pattern, and so on. For instance, different vibration may be output in a synthesized manner or in a sequential manner.

The haptic module 154 may generate various tactile effects, including not only vibration, but also arrangement of pins vertically moving with respect to a skin being touched, air injection force or air suction force through an injection hole or a suction hole, touch by a skin surface, presence or absence of contact with an electrode, effects by stimulus such as an electrostatic force, reproduction of cold or hot feeling using a heat absorbing device or a heat emitting device, and the like.

The haptic module 154 may be configured to transmit tactile effects through a user's direct contact, or a user's muscular sense using a finger or a hand. The haptic module 154 may be implemented in two or more in number according to the configuration of the mobile terminal 100.

The memory 160 may store a program for processing and controlling the controller 180. Alternatively, the memory 160 may temporarily store input/output data (e.g., phonebook data, messages, audios, still images, videos, and the like). Also, the memory 160 may store data related to various patterns of vibrations and sounds outputted upon the touch input on the touch screen.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the mobile terminal 100 may operate a web storage which performs the storage function of the memory 160 on the Internet.

The interface unit 170 may generally be implemented to interface the mobile terminal with external devices. The interface unit 170 may allow a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), and the like. Also, the device having the identification module (hereinafter, referred to as 'identification device') may be implemented in a type of smart card. Hence, the identification device can be coupled to the mobile terminal 100 via a port.

The interface unit 170 may serve as a path for power to be supplied from an external cradle to the mobile terminal 100 when the mobile terminal 100 is connected to the external cradle or as a path for transferring various command signals inputted from the cradle by a user to the mobile terminal 100. Such various command signals or power inputted from the cradle may operate as signals for recognizing that the mobile terminal has accurately been mounted to the cradle.

The controller 180 typically controls the overall operations of the mobile terminal 100. For example, the controller 180 performs the control and processing associated with telephony calls, data communications, video calls, and the like. The controller 180 may include a multimedia module 181 for reproducing multimedia data. The multimedia module 181 may be implemented in an integrated manner within the controller 180 or may be implemented in a separate manner from the controller 180.

Furthermore, the controller 180 can perform a pattern recognition processing so as to recognize writing or drawing input on the touch screen as text or image.

Furthermore, the controller 180 may implement a lock state for limiting the user's control command input to applications when the state of the mobile terminal satisfies the prescribed condition. Furthermore, the controller 180 may control a lock screen displayed in the lock state based on a touch input sensed over the display unit 151 (hereinafter, referred to as a "touch screen") in the lock state.

The power supply unit 190 receives external power and internal power under the control of the controller 180 to provide power required by various components.

Various embodiments described herein may be implemented in a medium that can be read by a computer or similar device using software, hardware, or any combination thereof.

For hardware implementation, it may be implemented by using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, electrical units designed to perform the functions described herein. In some cases, such embodiments may be implemented in the controller 180 itself.

For software implementation, the embodiments such as procedures or functions may be implemented together with separate software modules. The software modules may perform at least one function or operation described herein.

Software codes can be implemented by a software application written in any suitable programming language. The software codes may be stored in the memory 160 and executed by the controller 180.

Hereinafter, a mobile terminal according to an embodiment of the present disclosure described in FIG. 1, or a mobile terminal disposed with constituent elements of the mobile terminal, or the structure of a mobile terminal will be described.

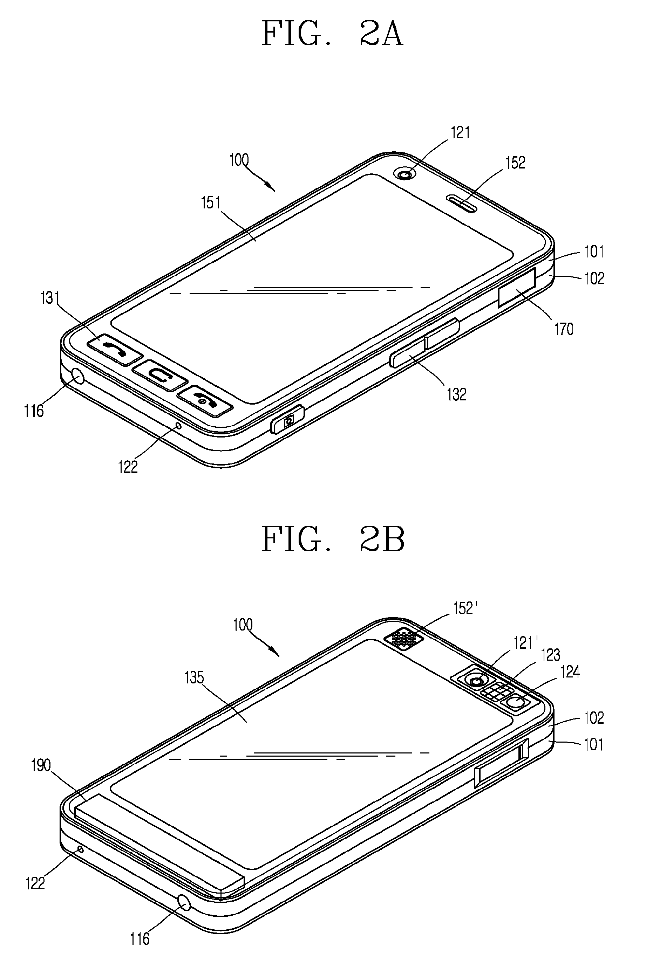

FIG. 2A is a front perspective view illustrating an example of a mobile terminal according to an embodiment of the present disclosure or an example of a mobile terminal, and FIG. 2B is a rear perspective view illustrating the mobile terminal in FIG. 2A.

The mobile terminal 100 disclosed herein is provided with a bar-type terminal body. However, the present invention is not only limited to this type of terminal, but also applicable to various structures of terminals such as slide type, folder type, swivel type, swing type, and the like, in which two and more bodies are combined with each other in a relatively movable manner.

According to the drawing, the terminal body 100 (hereinafter, referred to as a "body") may include a front surface, a lateral surface, and a rear surface. Furthermore, the body may include both ends thereof formed along the length direction.

The body 100 includes a case (casing, housing, cover, etc.) forming an appearance of the terminal. In this embodiment, the case may be divided into a front surface (hereinafter, referred to as a "front case") 101 and a rear surface (hereinafter, referred to as a "rear case") 102. Various electronic components may be incorporated into a space formed between the front case 101 and rear case 102. At least one middle case may be additionally disposed between the front case 101 and the rear case 102.

The cases may be formed by injection-molding a synthetic resin or may be also formed of a metal material such as stainless steel (STS), titanium (Ti), or the like.

A display unit 151, an audio output module 152, a camera 121, a user input unit 130 (130/131, 132), a microphone 122, an interface 170, and the like may be arranged on the terminal body 100, mainly on the front case 101.

The display unit 151 occupies a most portion of the front case 101. The audio output unit 152 and the camera 121 are disposed on a region adjacent to one of both ends of the display unit 151, and the user input unit 131 and the microphone 122 are disposed on a region adjacent to the other end thereof. The user interface 132 and the interface 170, and the like, may be disposed on a lateral surface of the front case 101 and the rear case 102. On the contrary, the microphone 122 may be disposed at the other end of the body 100.

The user input unit 130 is manipulated to receive a command for controlling the operation of the portable terminal 100, and may include a plurality of manipulation units 131, 132. The manipulation units 131, 132 may be commonly designated as a manipulating portion, and any method may be employed if it is a tactile manner allowing the user to perform manipulation with a tactile feeling.

The content inputted by the manipulation units 131, 132 may be set in various ways. For example, the first manipulation unit 131 may receive a command, such as start, end, scroll, or the like, and the second manipulation unit 132 may receive a command, such as controlling a volume level being outputted from the audio output unit 152, or switching it into a touch recognition mode of the display unit 151.

Referring to FIG. 2B, an audio output unit 152' may be additionally disposed on a rear surface, namely, a rear case 102, of the terminal body. The audio output unit 152' together with the audio output unit 152 (refer to FIG. 2A) can implement a stereo function, and it may be also used to implement a speaker phone mode during a phone call.

Furthermore, a power supply unit 190 for supplying power to the mobile terminal 100 may be mounted on a rear surface of the terminal body. The power supply unit 190 may be configured so as to be incorporated in the terminal body, or directly detachable from the outside of the terminal body.

Furthermore, a touch pad 135 for detecting a touch may be additionally mounted on the rear case 102. The touch pad 135 may be configured in an optical transmission type similarly to the display unit 151. In this case, if the display unit 151 is configured to output visual information from both sides of the display unit 151, then the visual information may be also recognized through the touch pad 135. The information being outputted from the both sides thereof may be controlled by the touch pad 135. In addition, a display may be additionally mounted on the touch pad 135, and a touch screen may be also disposed on the rear case 102.

Furthermore, a camera 121' may be additionally mounted on the rear case 102 of the terminal body. The camera 121' has an image capturing direction, which is substantially opposite to the direction of the camera 121 (refer to FIG. 2A), and may have different pixels from those of the first video input unit 121.

For example, that the camera 121 may preferably have a relatively small number of pixels enough not to cause a difficulty when the user captures his or her own face and sends it to the other party during a video call or the like, and the camera 121' has a relatively large number of pixels since the user often captures a general object that is not sent immediately. The cameras 121' may be provided in the terminal body 100 in a rotatable and popupable manner.

Furthermore, a flash 123 and a mirror 124 may be additionally disposed adjacent to the camera 121'. The flash 123 illuminates light toward an object when capturing the object with the camera 121'. The mirror allows the user to look at his or her own face, or the like, in a reflected way when capturing himself or herself (in a self-portrait mode) by using the camera 121'.

Furthermore, an audio output unit 152' may be additionally disposed on a rear surface of the terminal body. The audio output unit 152' together with the audio output unit 152 (refer to FIG. 2A) can implement a stereo function, and it may be also used to implement a speaker phone mode during a phone call.

Furthermore, a power supply unit 190 for supplying power to the portable terminal 100 may be mounted on a rear surface of the terminal body. The power supply unit 190 may be configured so as to be incorporated in the terminal body, or directly detachable from the outside of the terminal body.

A touch pad 135 for detecting a touch may be additionally mounted on the rear case 102. The touch pad 135 may be configured in an optical transmission type similarly to the display unit 151. In this case, if the display unit 151 is configured to output visual information from both sides of the display unit 151, then the visual information may be also recognized through the touch pad 135. The information being outputted from the both sides thereof may be controlled by the touch pad 135. In addition, a display may be additionally mounted on the touch pad 135, and a touch screen may be also disposed on the rear case 102.

The touch pad 135 operates in a reciprocal relation to the display unit 151 of the front case 101. The touch pad 135 may be disposed in parallel on a rear side of the display unit 151. The touch pad 135 may have the same or a smaller size as or than that of the display unit 151.

Furthermore, a mobile terminal according to an embodiment of the present disclosure capable of including at least one of the foregoing constituent elements may store surrounding circumstance information when an image is captured through a camera. In addition, a mobile terminal according to en embodiment of the present disclosure may transmit the stored circumstance information to an external device, thereby reproducing circumstance information at the time at which the image had been captured.

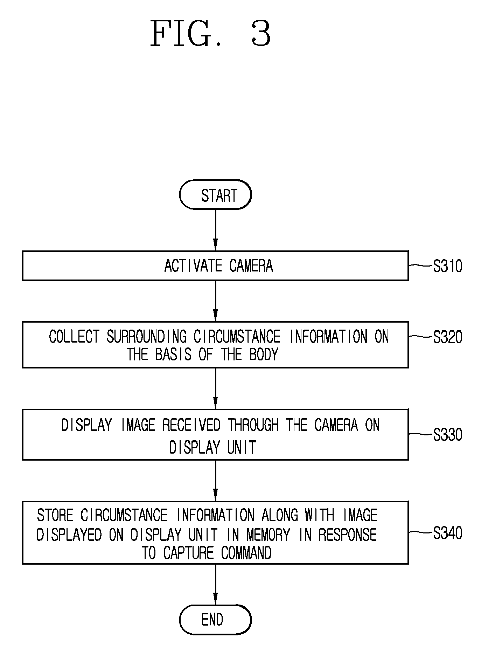

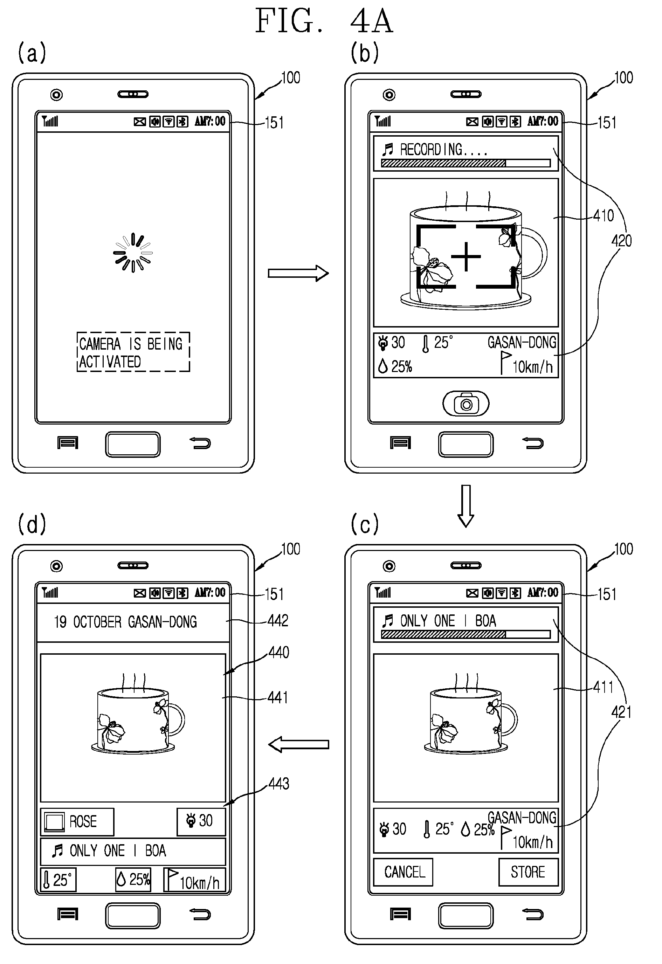

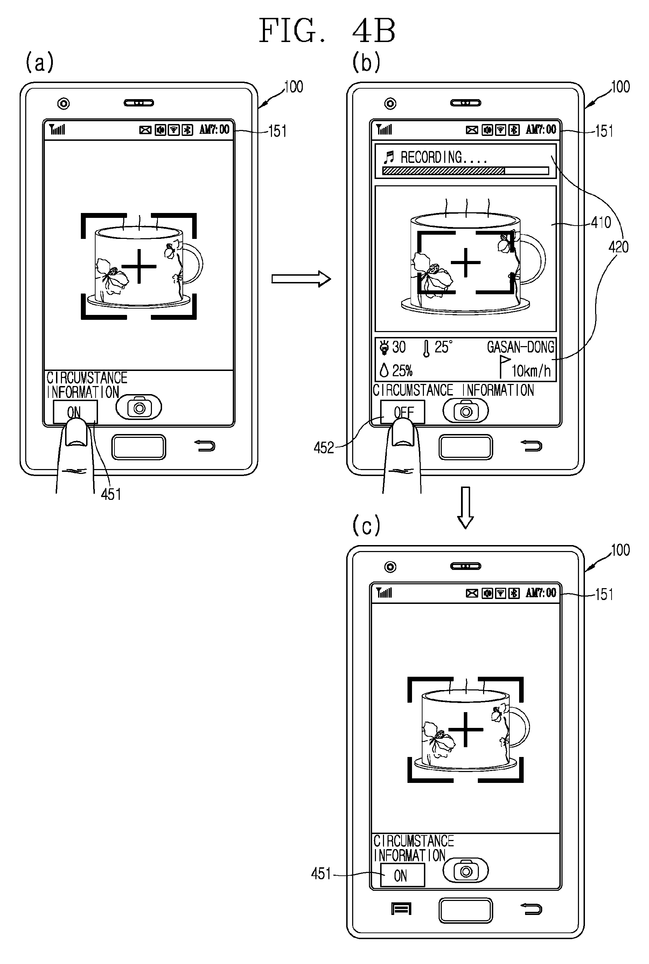

Hereinafter, referring to FIGS. 3, 4A and 4B, a control method of collecting circumstance information and providing the same will be described by taking an example. FIG. 3 is a flow chart for explaining a method of controlling a mobile terminal according to an embodiment of the present disclosure, and FIGS. 4A and 4B are conceptual views for explaining a control method illustrated in FIG. 3.

In a mobile terminal according to an embodiment of the present disclosure, the controller 180 activates a camera 121 or 121' (refer to FIGS. 1, 2A and 2B) in response to a camera activation command (S310). Here, the camera activation command may be received based on an icon of the camera function application being selected by the user. Furthermore, the camera activation command may be received based on a physical key provided in the mobile terminal being pressed by the user.

In this manner, when the camera 121 or 121' is activated (S310), the circumstance information unit 182 collects surrounding circumstance information based on the mobile terminal body (S320).

Here, circumstance information may include at least one of information that can be sensed through various sensors contained in a mobile terminal according to the present disclosure at a time point at which the camera is activated. Furthermore, the circumstance information may be at least one of information received through wireless communication with an mobile terminal according to the present disclosure.

On the other hand, the circumstance information may include detailed information. The detailed information corresponds to the location information of a mobile terminal according to the present disclosure, humidity information, temperature information, wind speed information, sound information, brightness information, smell information, noise information, pollution level information, weather information, date information, dust information and infrared information around the mobile terminal, respectively.

When the camera is activated as described above, the circumstance information unit collects surrounding circumstance information around the mobile terminal. The circumstance information may be sensed at a time point at which the camera is activated, and collected by the circumstance information unit 182. Furthermore, the circumstance information may be sensed in advance prior to activating the camera, and collected by the circumstance information unit 182 when the camera is activated.

On the other hand, as illustrated in the foregoing step S310, when the camera 121 or 121' is activated, the controller 180 displays an image received through the camera 121 or 121' on the display unit 151 (S330).

On the other hand, the steps S320 and S330 may not be limited to the order, and thus operations corresponding to the steps S320 and S330 can be carried out at the same time.

When a capture command is received in a state that an image is displayed on the display unit 151 as in the step S330, the controller 180 may store the collected circumstance information along with the image displayed on the display unit 151 in the memory 160 (not shown) (S340).

Here, the capture command may be received by a visual key or soft key displayed on the display unit 151 being touched. Furthermore, the capture command may be received based on a physical key provided in the mobile terminal body 100 being pressed by the user.

Furthermore, the controller 180 may store an image received through the camera at a time point at which the capture command is received in the memory 160. Then, the controller 180 may match the captured image to the collected circumstance information such that the image (or captured image) and the collected circumstance information are used in a mutually associated manner.

For example, referring to FIG. 4A, when the camera is activated as illustrated in FIG. 4A(a), the controller 180 may display an image received through the camera in one region (or preview region 410) of the display unit 151, and display circumstance information collected through the circumstance information unit 182 (not shown) in at least another region 420 thereof as illustrated in FIG. 4A(b). Here, the collected circumstance information may be music information, brightness information, humidity information, temperature information, wind speed information, and location information.

Then, when the capture command is received, the controller 180 stores an image displayed in the preview region 410 along with the collected circumstance information in the memory 160. When a capture command is received as described above, the captured image and collected circumstance information may be displayed as illustrated in FIG. 4A(c). Here, the music information may be a song with the title of "Only one", the brightness information "30" lumens, the humidity information "25%", the temperature information "25 degrees", the wind speed information "10 km/h", and the location information "Gasan-dong".

On the other hand, when the image and collected circumstance information are matched and stored in response to the capture command as described above, the controller 180 may generate an image object 440 displayed with the image and circumstance information using the image and collected circumstance information as illustrated in FIG. 4A(d). The captured image is displayed in one region 441 of the image object, and detailed information items (refer to reference numerals 442 and 443) corresponding to a plurality of detailed information (for example, music information, brightness information, humidity information, temperature information, wind speed information, and location information), respectively, contained in the collected circumstance information, may be displayed in another region other than the one region 441.

The image object 440 can be viewed in an application having an album function and other functions, and a method of using the image object 440 will be described in detail later.

On the other hand, whether or not to collect circumstance information based on the camera 121 or 121' being activated may be controlled by the user's selection. In other words, a mobile terminal according to an embodiment of the present disclosure may collect circumstance information only when it is desired by the user.

For example, a mobile terminal according to an embodiment of the present disclosure may display an icon 451, 452 for turning on or off the collection of circumstance information as illustrated in FIGS. 4B(a) and 4B(b). For example, when the icon "on" 451 is selected as illustrated in FIG. 4B(a), the controller 180 may control the circumstance information unit 182 to collect circumstance information as illustrated in FIG. 4B(b). When the icon "off" 452 is selected as illustrated in FIG. 4B(b), the controller 180 may control the circumstance information unit 182 not to collect circumstance information as illustrated in FIG. 4B(c).

Furthermore, whether or not to collect circumstance information may be also controlled through various methods in addition to the foregoing embodiment, and for example, whether or not to collect circumstance information may be controlled through a voice command.

As described above, a mobile terminal according to an embodiment of the present disclosure may store circumstance information along with a captured image, thereby providing information on an image-captured circumstance to the user.

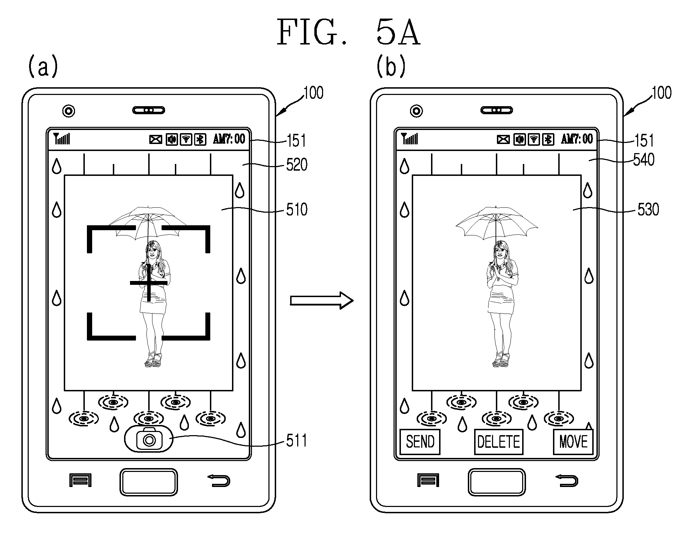

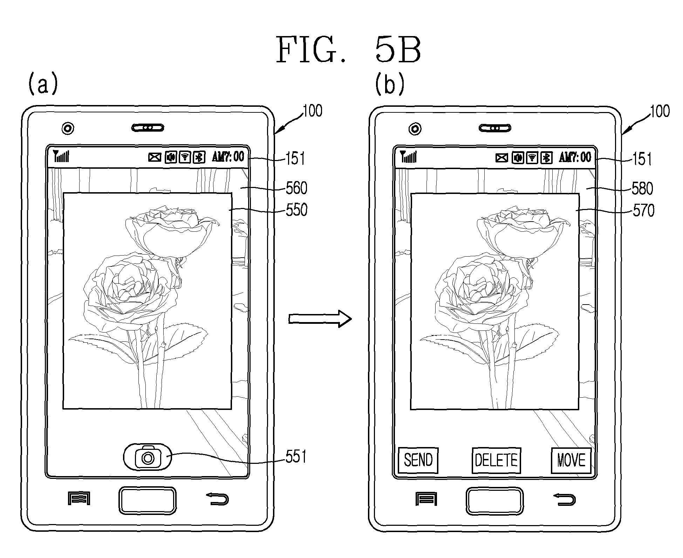

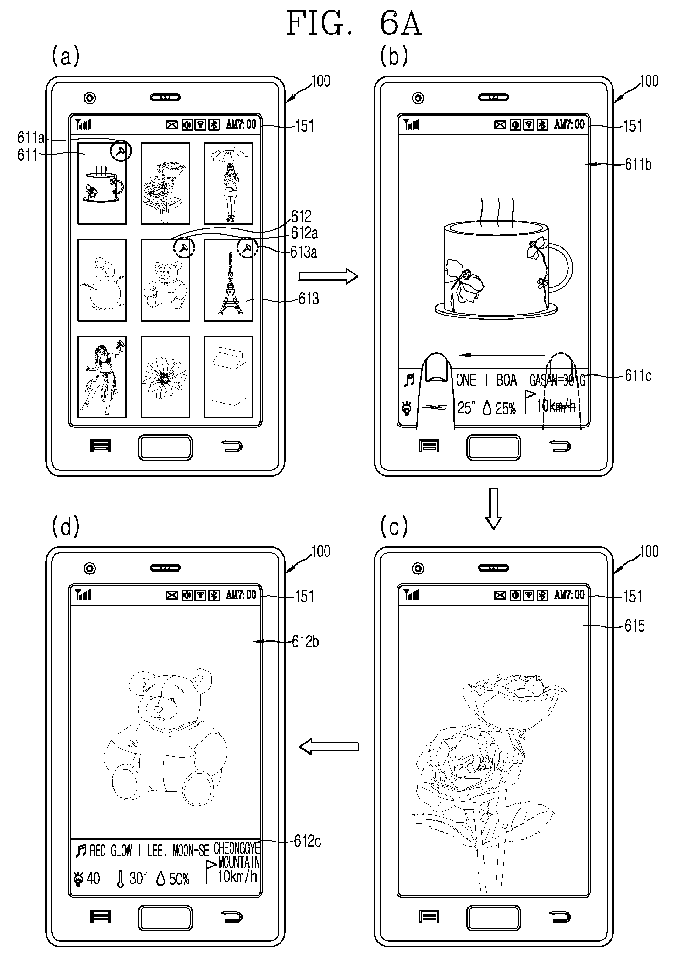

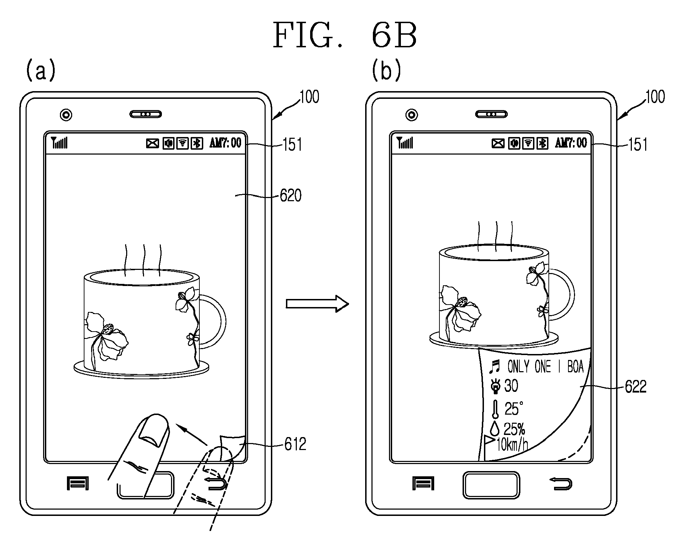

Hereinafter, a method of providing information associated with the collected circumstance information will be described in detail with reference to the accompanying drawings. FIGS. 5A, 5B, 6A and 6B are conceptual views for explaining a method of providing information associated with circumstance information collected in a mobile terminal according to an embodiment of the present disclosure.

In a mobile terminal according to an embodiment of the present disclosure, when the camera 121 or 121' is activated and circumstance information is collected, the controller 180 can provide information on the collected circumstance information through a frame (or picture frame).

For example, when the camera 121 or 121' is activated as illustrated in FIG. 5A(a), the controller 180 displays an image received through the camera 121 or 121' in one region (or preview region 510) of the display unit 151. Then, the controller 180 displays an image or video corresponding to the collected circumstance information in at least one region excluding the preview region 510. In other words, the image or video 520 corresponding to the collected circumstance information may be displayed in the form of a frame or picture frame. For example, when the current weather is "rainy" in the collected circumstance information, the controller 180 may display an image associated with rain around the preview region 510. Then, when a capture command is applied, the controller 180 may display the captured image in one region 530 of the display unit 151, and display an image or video corresponding to the collected circumstance information in the form of a frame (or picture frame) in at least one region 540 around the one region 530 as illustrated in FIG. 5A(b).

Then, the controller 180 may store the frame (or picture frame) along with the captured image.

Furthermore, for another example, when the current weather is "clear" among the collected circumstance information, the controller 180 may display an image associated with "clear" at a surrounding 560 of the preview region 550. Then, when a capture command is applied, the controller 180 display the captured image in one region 570 of the display unit 151, and display an image or video corresponding to the collected circumstance information in the form of a frame (or picture frame) in at least one region 580 around the one region 570 as illustrated in FIG. 5B(b).

On the other hand, the controller 180 may display a captured or downloaded image on the display unit using a gallery (or album) function. On the other hand, when the gallery (or album) function is carried out, the controller 180 may display at least one of the captured and downloaded images on the display unit 151 as illustrated in FIG. 6A(a).

Here, the controller 180 may display an image object (or icon) on an image stored along with the circumstance information to distinguish the image stored along with the circumstance information from the other images. As illustrated in FIG. 6A(a), image objects 611, 612a, 613a, 614a may be displayed in one region of images 611, 612, 613, 614 that are stored along with circumstance information, respectively, among a plurality of images displayed on the display unit 151. Furthermore, as illustrated in FIG. 6A(b), when any one 611b of the images 611, 612, 613, 614 that are stored along with circumstance information is displayed on the display unit 151, the controller 180 may display circumstance information along therewith in one region 611c of the display unit 151. Here, circumstance information displayed in the one region 611c may disappear by the user's selection or the control of the controller 180. On the other hand, when an image 615 that is not stored along with circumstance information is displayed as illustrated in FIG. 6A(c), only the image 615 is displayed on the display unit 151.

Meanwhile, the controller 180 may display an image object 621 or distort the one region 621 of the image 620 in one region of the image 620 in a state that the image 620 is displayed as illustrated in FIG. 6B(a), thereby indicating that there exists circumstance information stored along with the image 620.

Then, when a touch input is applied to the image object or one region 621, the controller 180 may display circumstance information as illustrated in FIG. 6B(b).

The controller 180 may display circumstance information in one region 622 of the image based on a drag or slide touch input, which is likely to turn over the sheet of paper, to the image object or one region 621. At this time, the controller 180 may disappear the display of one region of the image 620 according to the drag or slide touch input, like an effect that the rear sheet of paper is shown.

As described above, a mobile terminal according to an embodiment of the present invention may display circumstance information along with the captured image, thereby effectively providing the information of circumstance for which the image had been captured to the user.

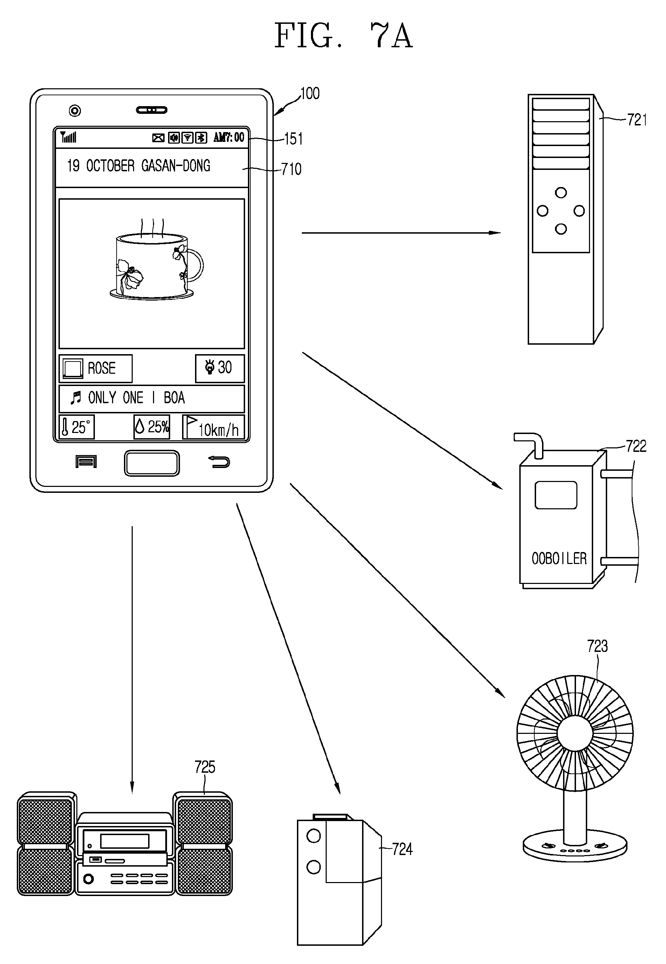

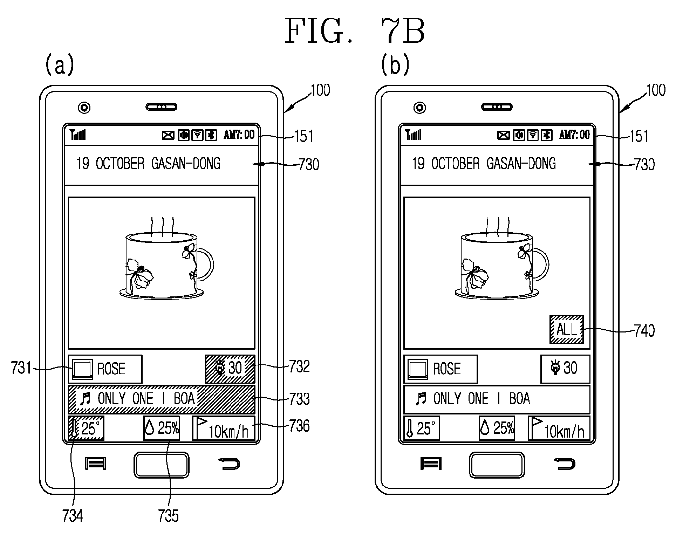

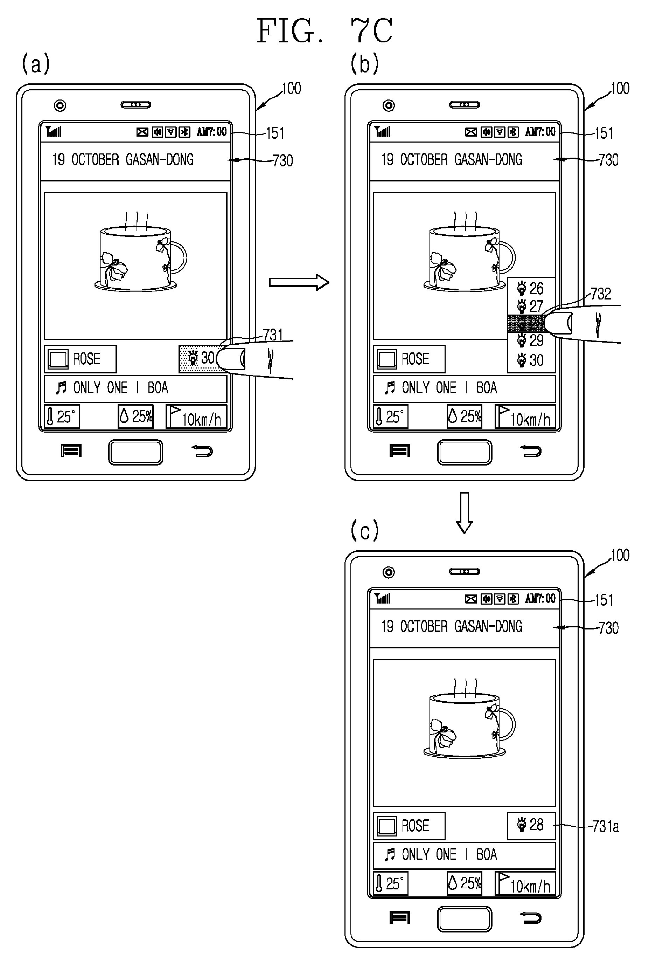

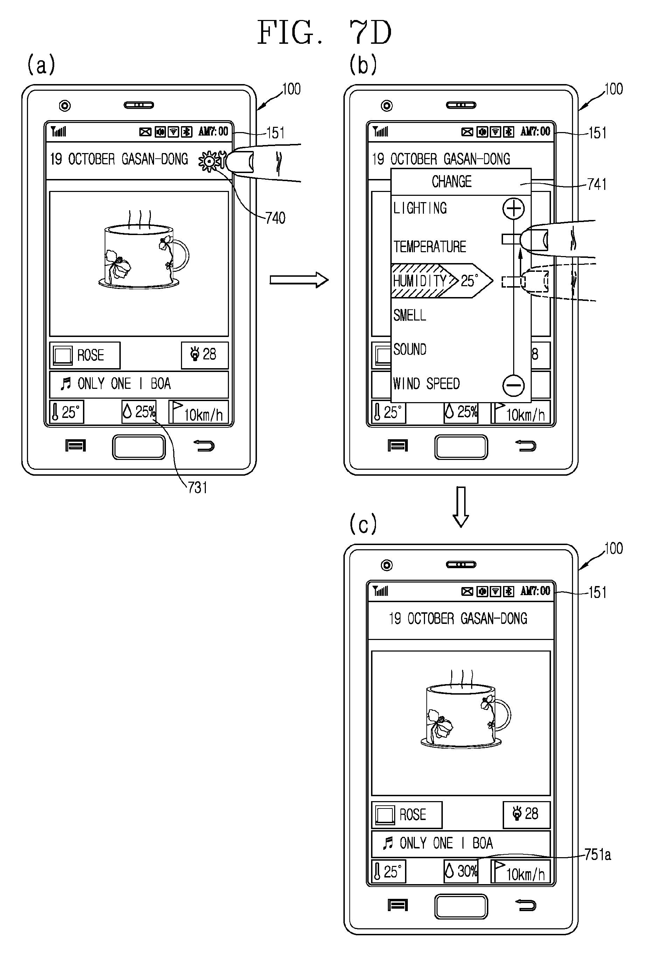

Hereinafter, a method of using the collected circumstance information will be described in more detail with reference to the accompanying drawings. FIGS. 7A, 7B, 7C and 7D are conceptual views for explaining a method of editing circumstance information collected in a mobile terminal according to an embodiment of the present disclosure.

In a mobile terminal according to an embodiment of the present disclosure, the controller 180 may transmit circumstance information stored along with the image to an external device using an image object 440 (refer to FIG. 4A(d)) as previously illustrated in FIG. 4A. In other words, the controller 180 may transmit appropriate circumstance information to at least one external device to create an environment corresponding to the collected circumstance information.

Here, the external device can communicate with a mobile terminal according to an embodiment of the present disclosure using at least one of Wireless Fidelity (Wi-Fi), Digital Living Network Alliance (DLNA), Near Field Communication (NFC) and BlueTooth (BT), Wi-Fi Direct communication methods. When connected to an external device as described above, the controller 180 may transmit at least one of a plurality of detailed information contained in circumstance information to an external device based on the user's selection.

Here, the external device may be one of various types of devices capable of creating an environment corresponding to the collected circumstance information.

For example, as illustrated in FIG. 7A, the external device may be a home appliance such as an air conditioner 721, a heater 722, a fan 723, a humidifier 724, an audio device 725, and the like. On the other hand, when a mobile terminal is located at a preset place (for example, at the user's home"), the controller 180 may control the wireless communication unit 110 (refer to FIG. 1) to communicate with at least one externals device.

In this manner, the controller 180 may transmit at least one of circumstance information matched to the image object 710 to an external device. Furthermore, upon receiving circumstance information, the external device may adjust an output value to be matched to the received circumstance information.

When transmitting circumstance information to an external device, the controller 180 may selectively transmit detailed information matched to the characteristics of the external device among a plurality of detailed information contained in the circumstance information. For example, the controller 180 may control the wireless communication unit 110 to transmit wind speed information to the "fan" 723, and transmit temperature information to the "heater" 722.

Considering a specific example for transmitting circumstance information to an external device using the image object 730, the controller 180 may transmit detailed information corresponding to detailed information items 731, 732, 733, 734, 735, 736 selected by the user from a plurality of detailed information items 731, 732, 733, 734, 735, 736 corresponding to a plurality of detailed information contained in the circumstance information as illustrated in FIG. 7B(a). In this case, the controller 180 may transmit the selected detailed information to an external device on which detailed information corresponding to the selected detailed item can be reflected.

On the other hand, the controller 180 may control the display unit 151 to visually distinguish detailed information items 731, 732, 733, 734, 735, 736 selected by the user from a plurality of detailed information items from the other detailed information items that are not selected.

As illustrated in the drawing, the controller 180 may transmit brightness information, sound information and temperature information among the circumstance information to at least one external device.

On the other hand, the controller 180 may display all transmit icon 740 on the display unit 151 to transmit a plurality of detailed information contained in the circumstance information as a whole to at least one external device. Accordingly, when the all transmit icon 740 is selected by the user, the controller 180 may transmit detailed information corresponding to the detailed information items displayed on the image object 730 to at least one external device.

Meanwhile, in a mobile terminal according to an embodiment of the present disclosure, the controller 180 may edit the collected circumstance information. For example, when the user wants to modify brightness information, the controller 180 may display an edit window for modifying brightness information or provide it through screen switching. Then, when brightness information is changed using the edit window, the collected circumstance information may be replaced with the changed brightness information or a new image object containing the changed brightness information may be generated.

Considering an example of editing circumstance information, when a touch input in a preset scheme is applied to the detailed information item displayed on the image object 730 as illustrated in FIG. 7C, the circumstance information can be edited. For example, when a touch input (for example, long touch, double touch) in a preset scheme is applied to the bright information item 731 as illustrated in FIG. 7C(a), the controller 180 may display an edit window 732 in at least one region of the display unit 151. Then, when brightness information is selected through the edit window 732, the controller 180 displays the changed brightness information in the brightness information item 731a as illustrated in FIG. 7C(c). Then, when it is selected that brightness information corresponding to the brightness information item 731a is transmitted to an external device, the controller 180 may transmit the changed brightness information to the external device.

In this manner, the controller 180 can individually provide an edit window for a specific item. Moreover, the controller 180 may provide an edit window to edit circumstance information in one screen as illustrated in FIG. 7D.

For example, when a setting icon 740 is selected as illustrated in FIG. 7D(a), an edit window 741 may be displayed in at least one region of the display unit 151 as illustrated in FIG. 7D(b). The controller 180 may display items corresponding to detailed information contained in circumstance information to change (or modify, edit) the circumstance information as a whole through the edit window 741. Meanwhile, when humidity information is changed through the edit window 741, the controller 180 may display the changed humidity information in the humidity information item 751a as illustrated in FIG. 7D(c).

As described above, a mobile terminal according to an embodiment of the present disclosure may transmit the collected circumstance information to an external device, thereby creating an environment at the time at which the image had been captured. Furthermore, a mobile terminal according to an embodiment of the present disclosure may edit the collected circumstance information based on the user's selection, thereby creating a user's customized environment.

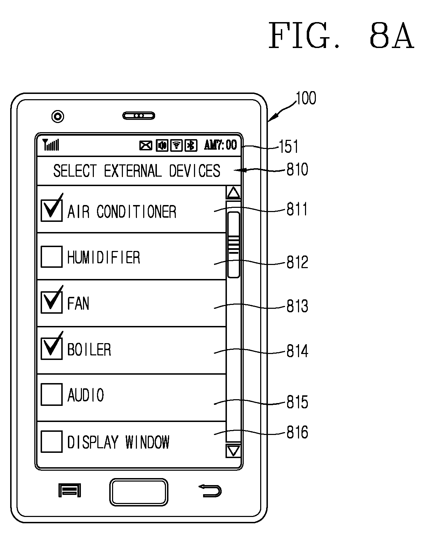

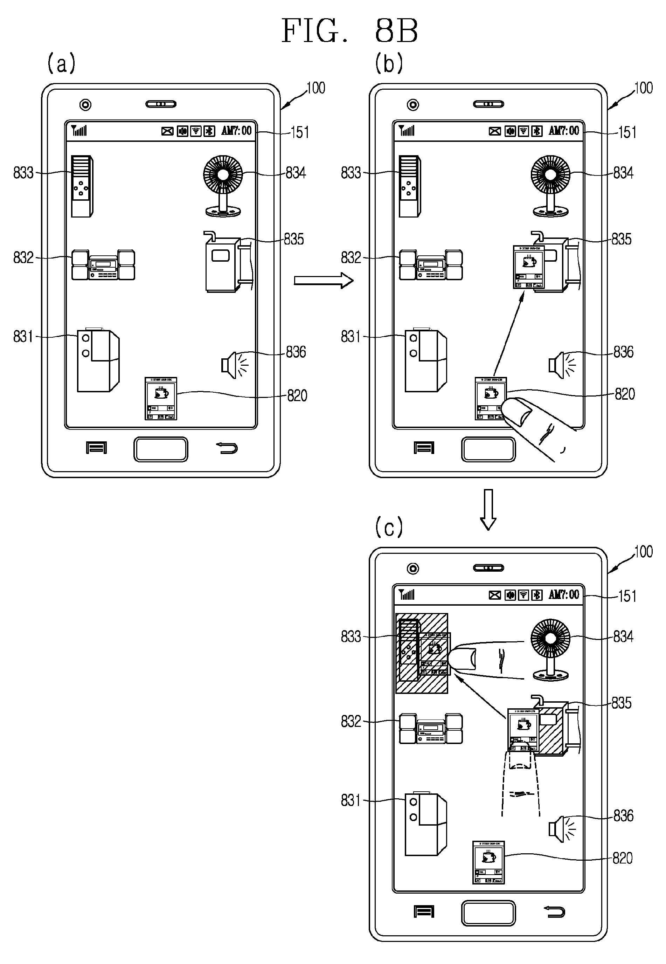

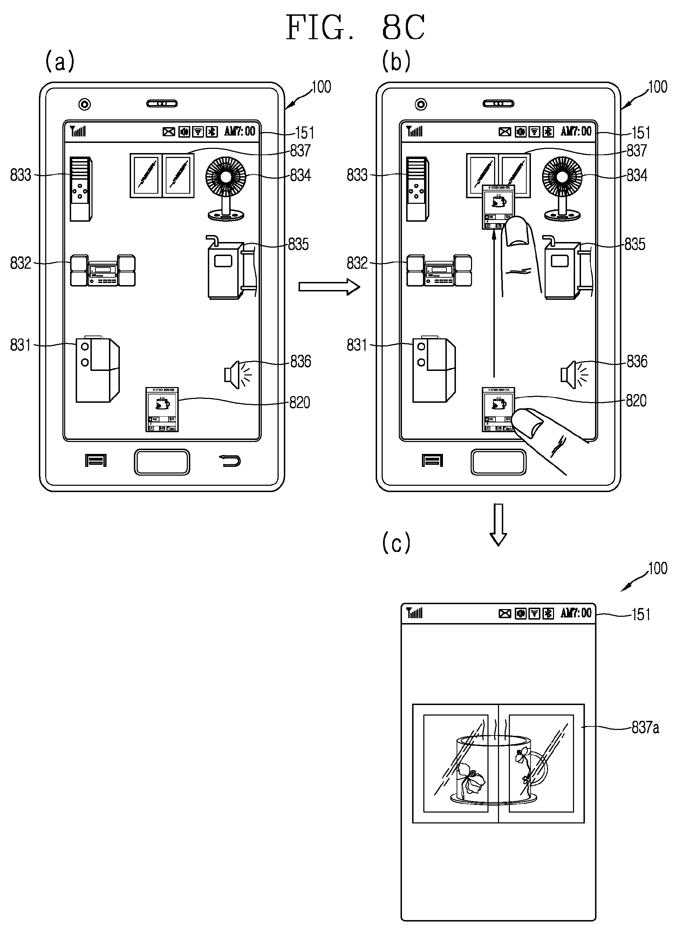

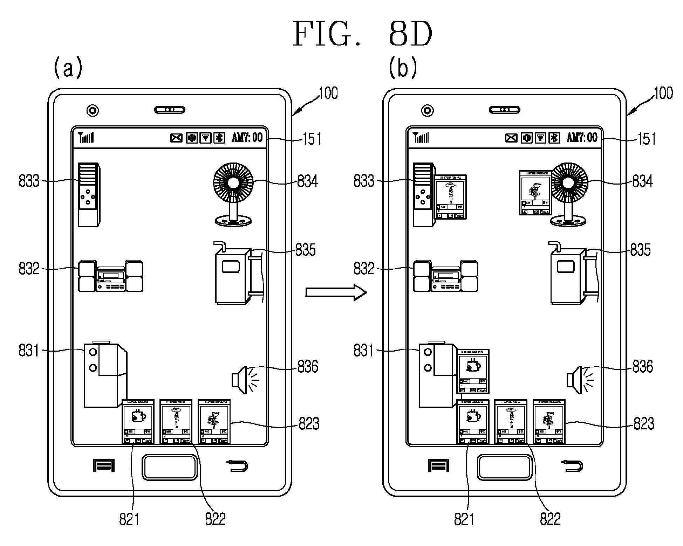

Hereinafter, an embodiment of transmitting circumstance information using an image object will be described in more detail with reference to the accompanying drawings. FIGS. 8A, 8B, 8C and 8D are conceptual views for explaining a method of sharing circumstance information collected in a mobile terminal according to an embodiment of the present disclosure.

As an example, in a mobile terminal according to an embodiment of the present disclosure, an external device for receiving circumstance information may be selected using a list 810 containing items 811, 812, 813, 814, 815, 816 corresponding to a plurality of external devices, respectively, as illustrated in FIG. 8A. As illustrated in the drawing, when the air conditioner, fan and boiler items 811, 813, 814 are selected, the controller 180 may transmit circumstance information to external devices corresponding to the selected air conditioner, fan and boiler items 811, 813,814.

For another example, in a mobile terminal according to an embodiment of the present disclosure, the controller 180 may display image objects 831, 832, 833, 834, 835, 836 corresponding to external devices, respectively, on the display unit 151 as illustrated in FIG. 8B(a). Accordingly, the user may intuitively determine an external device to which circumstance information is to be transmitted.

The locations at which the image objects 831, 832, 833, 834, 835, 836 are disposed may be determined based on the user's selection. Furthermore, in actuality, the locations at which the image objects 831, 832, 833, 834, 835, 836 are disposed may correspond to the locations at which the external devices are disposed.

In this manner, image objects corresponding to external devices may be displayed, and an image object (or card 820) matched to the circumstance information may be displayed on the display unit 151.

Furthermore, as illustrated in FIGS. 8B(b) and 8B(c), when a circumstance information card 820 is dragged to the at least one of image objects 835, 833 corresponding to external devices, circumstance information may be transmitted to an external device corresponding to the least one image object 835, 833. In this case, the controller 180 may selectively transmit detailed information that can be reflected by the external device among a plurality of detailed information contained in the circumstance information.

Furthermore, though not shown in the drawing, circumstance information may be transmitted to at least one external device based on at least one of image objects 831, 832, 833, 834, 835 corresponding to external devices being dragged to the circumstance information card 820.

When circumstance information is transmitted to an external device as described above, the external device performs an operation using the received circumstance information. For example, as illustrated in FIGS. 8C(a) and 8C(b), when the circumstance information card 820 is dragged to an image object 837 corresponding to a window having a display function, the window having a display function may display an image corresponding to the image contained in the circumstance information card 820 as illustrated in FIG. 8C(c).

As illustrated in the drawing, a mobile terminal according to an embodiment of the present disclosure may transmit circumstance information to an external device using one circumstance information card.

Furthermore, a mobile terminal according to an embodiment of the present disclosure may transmit circumstance information to at least one external device using a plurality of circumstance information cards 821, 822, 823 as illustrated in FIG. 8D(a).

Here, the plurality of circumstance information cards 821, 822, 823 may be circumstance information cards selected by the user, or currently used circumstance information cards or circumstance information cards containing circumstance information similar or contrary to a current surrounding environment. In addition, the plurality of circumstance information cards 821, 822, 823 may be displayed based on various criteria.

In other words, a mobile terminal according to an embodiment of the present disclosure may display a plurality of circumstance information cards 821, 822, 823 to selectively use different circumstance information contained in the plurality of circumstance information cards 821, 822, 823.

Furthermore, as illustrated in FIG. 8D(b), when the first circumstance information card 821 is moved to an image object 833 corresponding to an air conditioner, the controller 180 may transmit temperature information contained in the first circumstance information card 821 to the air conditioner. Furthermore, when the second circumstance information card 822 is moved to an image object 834 corresponding to a fan, the controller 180 may transmit wind speed information contained in the second circumstance information card 822 to the fan. Furthermore, when the third circumstance information card 823 is moved to an image object 831 corresponding to a humidifier, the controller 180 may transmit humidity information contained in the third circumstance information card 823 to the humidifier.

As described above, a mobile terminal according to an embodiment of the present disclosure may provide intuitive information to the user using an image object corresponding to the external device.

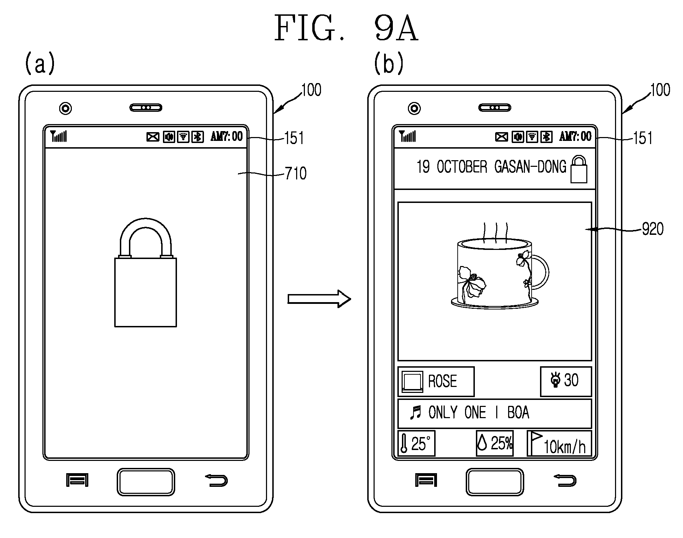

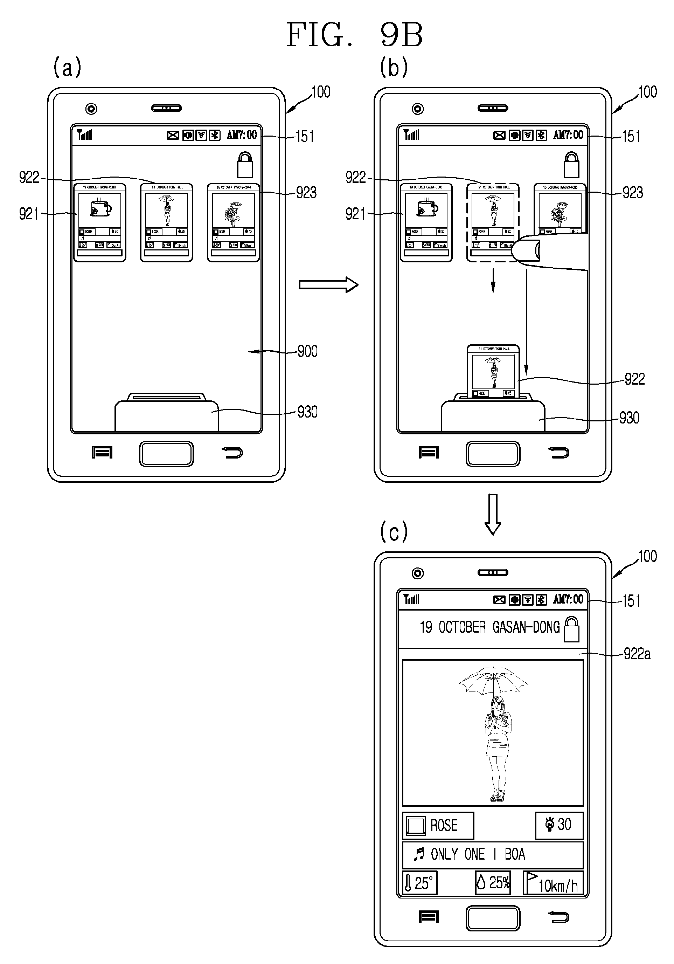

Hereinafter, when the status or surrounding circumstance of a mobile terminal satisfies a preset condition, a method of providing an image object or circumstance information card corresponding to the circumstance information will be described in more detail with reference to the accompanying drawings. FIGS. 9A and 9B are conceptual views for explaining a method of using circumstance information collected in a mobile terminal according to an embodiment of the present disclosure.

When the status or surrounding circumstance of a mobile terminal satisfies a preset condition in a mobile terminal according to an embodiment of the present disclosure, a circumstance information card may be provided to the user.

Here, a preset condition associated with the status of the mobile terminal may be whether or not the current location of the mobile terminal is a preset location.

Furthermore, a preset condition associated with the surrounding circumstance may provide circumstance information cards when detailed information having a number greater than a preset value is similar to circumstance information corresponding to the circumstance information cards among circumstance information (for example, humidity information, temperature information, wind speed information, sound information, brightness information, smell information, noise information, pollution level information, weather information, date information, dust information, and infrared information) around the mobile terminal. For example, when at least two of detailed information contained in circumstance information around the mobile terminal may be similar to (or contrary to, which can be changed based on settings) circumstance information contained in circumstance information cards, the controller 180 may provide the circumstance information card to the user.

For example, when the status or surrounding circumstance of a mobile terminal satisfies a preset condition in a state that a lock screen 910 limiting the reception of a control command for an application is displayed as illustrated in FIG. 9A(a), the controller 180 may display a circumstance information card 920 in a lock state as illustrated in FIG. 9A(b). Accordingly, the user may transmit circumstance information to at least one external device using the circumstance information card 920 in a lock state.

Furthermore, the controller 180 may display a plurality of circumstance information cards 921, 922, 923 corresponding to a preset condition on the lock screen 910 as illustrated in FIG. 9B(a). Then, when any one of the plurality of circumstance information cards 921, 922, 923 is moved to a preset location or onto a preset image object 930 as illustrated in FIG. 9B(b), the controller 180 may transmit circumstance information corresponding to the moved image object 922 to at least one external device.

Furthermore, the controller 180 may display the selected circumstance information card 922a on a lock screen as illustrated in FIG. 9B(c), thereby providing information on which circumstance information is currently applied to external devices to the user.

On the other hand, the controller 180 may transmit circumstance information on only external devices connected to the wireless communication unit 110 among circumstance information corresponding to the circumstance information cards. In this case, the controller 180 may provide information on which circumstance information has not been transmitted to non-connected external devices since the connection to external devices has not been made. Accordingly, though not shown in the drawing, the controller 180 may display a detailed information item corresponding to the detailed information that has not been transmitted among detailed information items contained in the circumstance information cards to be visually distinguished from the other detailed information.

Furthermore, though not shown in the drawing, when the status or surrounding circumstance of a mobile terminal satisfies a preset condition, the controller 180 may provide circumstance information cards even when the mobile terminal is not only released from the lock state but also operated in the lock state. In this case, the controller 180 may allow the user to select whether or not to display circumstance information cards using a popup window. Furthermore, the controller 180 may display information associated with circumstance information cards on a notification window for displaying event information at once.

As described above, a mobile terminal according to the present disclosure may recommend a circumstance information card to the user when the status or surrounding circumstance of a mobile terminal satisfies a preset condition.

In addition, though not shown in the drawing, a mobile terminal according to the present disclosure may transmit a circumstance information card itself to an external device. In other words, a mobile terminal according to the present disclosure may transmit circumstance information cards to acquaintances, thereby sharing circumstance information at tourist sites. Furthermore, the circumstance information card can be downloaded from an external server or social network service (SNS) site.

As described above, in a mobile terminal and a control method thereof according to an embodiment of the present disclosure, circumstance information around the mobile terminal may be stored along with an image acquired through the camera, thereby providing circumstance information at the time at which the image had been captured to the user.

Furthermore, in a mobile terminal and a control method thereof according to an embodiment of the present disclosure, circumstance information may be transmitted to an external device using wireless signals, thereby reproducing circumstance information at the time at which the image had been captured through the external device.

According to an embodiment of the present disclosure, the foregoing method may be implemented as codes readable by a computer on a medium written by the program. The computer-readable media may include all kinds of recording devices in which data that can be read by a computer system is stored. Examples of the computer-readable media may include ROM, RAM, CD-ROM, magnetic tape, floppy disk, and optical data storage device, and the like, and also include a device implemented via a carrier wave (for example, transmission via the Internet). In addition, the computer may include the controller 180 of the terminal.

The configurations and methods according to the above-described embodiments will not be applicable in a limited way to the foregoing mobile terminal, and all or part of each embodiment may be selectively combined and configured to make various modifications thereto.

## Claims

1. A mobile terminal, comprising:
a camera (121) disposed on the body;
a circumstance information unit configured to collect surrounding circumstance information on the basis of the body;
a display unit configured to display an image received through the camera; and
a controller configured to store the collected circumstance information along with the image in a memory in response to a capture command for the image being received.

2. The mobile terminal of claim 1, wherein the circumstance information comprises a plurality of detailed information, and
the plurality of detailed information comprise any one of the location information of the body, and humidity information, temperature information, wind speed information, sound information, brightness information, weather information, and smell information around the body.

3. The mobile terminal of claim 2, wherein the controller generates an image object displayed with the image and the collected circumstance information using the image and circumstance information stored in the memory.

4. The mobile terminal of claim 3, wherein the image is displayed in one region of the image object, and detailed information items corresponding to a plurality of detailed information, respectively, contained in the circumstance information are displayed in another region other than the one region.

5. The mobile terminal of claim 4, further comprising:
a wireless communication unit configured to transmit and receive information to and from an external device using wireless signals,
wherein when at least one of the detailed information items is selected, the controller controls the wireless communication unit to transmit detailed information corresponding to the selected detailed information item to a preset external device.

6. The mobile terminal of claim 5, wherein the controller controls the display unit such that a detailed information item corresponding to the detailed information transmitted to the preset external device is visually differentiated from the other detailed information items.

7. The mobile terminal of claim 4, wherein when a preset touch input is applied to the detailed information item, the controller displays an edit window in at least one region of the display unit such that the detailed information can be edited by the user.

8. The mobile terminal of claim 7, wherein the controller updates detailed information edited through the edit window, and controls the display unit to display the edited detailed information on a detailed information item corresponding to the edited detailed information among detailed information items displayed on the image object.

9. The mobile terminal of claim 4, wherein the image object is displayed on the display unit based on the user's display request or the terminal body being drawn close to a preset location.

10. The mobile terminal of claim 9, wherein the controller displays the image object on a lock screen limiting the reception of a control command for an application in response to the terminal body being drawn close to a preset location.

11. The mobile terminal of claim 10, wherein detailed information corresponding to a detailed item displayed on the image object is transmitted to at least one preset external device based on a touch input to the image object, and
the controller determines whether to transmit detailed information corresponding to the whole of a plurality of detailed items or transmit detailed information corresponding to part of the plurality of detailed information items based on a touch input to the image object among the plurality of detailed information items displayed on the image object.

12. The mobile terminal of claim 11, wherein when detailed information corresponding to part of the plurality of detailed information items is determined to be transmitted, at least one of the plurality of detailed information items is selected from the user, and
the controller processes the selected detailed information item in a highlighted manner.

13. The mobile terminal of claim 10, wherein a plurality of image objects are displayed on the lock screen,
and
when any one image object is moved to a preset location based on a touch input to the any one of the plurality of image objects, detailed information corresponding to a detailed information item displayed on the any one image object is transmitted to at least one preset external device.

14. The mobile terminal of claim 3, wherein the controller displays a plurality of image objects in one region in a circumstance information transmission mode, and displays a graphic image corresponding to at least one preset external device around the plurality of image objects,
and when any one of the plurality of image objects is dragged to any one of the graphic images, circumstance information corresponding to the dragged image object is transmitted to an external device corresponding to the any one graphic image among the at least one preset external device.

15. The mobile terminal of claim 14, wherein the controller selectively transmits information that can be used for the external device corresponding to the any one graphic image among circumstance information corresponding to the dragged image object.
